# FASCICULE DE BREVET EUROPEEN

(11) **EP 1 563 259 B1**
(45) Date de publication et mention de la délivrance du brevet: **15.08.2007**
(21) Numéro de dépôt: 03758058.6
(22) Date de dépôt: 22.10.2003
(51) Int. Cl.: G01D 5/247, G06T 9/20

(54) **SYSTEME D ANALYSE SPATIALE D UNE GRANDEUR PHYSIQUE.**
RAUMLICHE ANALYSESYSTEME FUR PHYSISCHE GROSSEN
SYSTEM FOR SPATIAL ANALYSIS OF A PHYSICAL QUANTITY

(30) Priorité: 24.10.2002 FR 0213312
(43) Date de publication de la demande: 17.08.2005
(73) Titulaire: CSEM Centre Suisse d'Electronique et de Microtechnique SA -Recherche et Développement, 2007 Neuchâtel (CH)
(72) Inventeur: BURGI, Pierre-Yves, CH-1211 GENEVE (CH); KAESS, François, CH-1312 ECLEPENS (CH); RUEDI, Pierre-François, CH-2068 HAUTERIVE (CH); NUSSBAUM, Pascal, CH-2016 CORTAILLOD (CH)
(74) Mandataire: Poidatz, Emmanuel
(86) Numéro de dépôt international: PCT/EP2003/011809
(87) Numéro de publication internationale: WO 2004/038337

(56) Documents cités:
- EP-A- 0 961 207
- EP-A- 1 150 250
- MORTARA A ET AL: "A COMMUNICATION SCHEME FOR ANALOG VLSI PERCEPTICE SYSTEMS" IEEE JOURNAL OF SOLID-STATE CIRCUITS, IEEE INC. NEW YORK, US, vol. 30, no. 6, 1 juin 1995 (1995-06-01), pages 660-669, XP000510117 ISSN: 0018-9200

## Description

La présente invention est relative à un système d'analyse spatiale d'une grandeur physique dont les valeurs spatiales sont respectivement représentées par des impulsions de mesure dont l'ordonnancement temporel est représentatif de ces valeurs.

Plus précisément, l'invention concerne l'analyse d'informations représentées par des signaux analogiques produits par les cellules d'un capteur sensibles à l'évolution locale de la grandeur physique dans un espace donné.

Dans le cadre de la technologie évoquée brièvement ci-dessus, il est déjà connu, afin de réduire la quantité d'informations d'un tel capteur et donc d'en simplifier l'analyse, de soumettre les signaux engendrés par les cellules du capteur à un processus d'ordonnancement temporel au moyen de filtres tournants. Ce processus permet de classer l'information obtenue en créant des impulsions dont la position temporelle traduit la pertinence de l'information ; les impulsions survenant le plus précocement codant l'information la plus pertinente.

Une application particulièrement intéressante de ce concept d'ordonnancement temporel peut se trouver dans le domaine de la reconnaissance de caractères où le flot de signaux analogiques est relevé par une série de "pixels" photosensibles par exemple, chaque "pixel" formant l'une des cellules du capteur. Il a alors été démontré que la reconnaissance pouvait être effectuée en utilisant une faible proportion seulement de l'information contenue dans l'image prise par le capteur. On peut ainsi simplifier le traitement de l'information et, par voie de conséquence, réduire la consommation des circuits du capteur.

Toutefois, on notera que ce concept peut être appliqué chaque fois qu'un phénomène observé se traduit par l'évolution spatiale d'une grandeur physique, évolution qui est représentée par des signaux analogiques dont il faut exploiter le contenu d'information.

L'invention a pour but de fournir un système d'analyse spatiale d'une grandeur physique du type générique indiqué, permettant d'affiner encore davantage la pertinence de l'information, cette pertinence pouvant être définie par des critères prédéterminés pouvant facilement être appliqués au choix de l'utilisateur du capteur.

L'invention a donc pour objet un système d'analyse spatiale d'une grandeur physique dont les valeurs spatiales sont respectivement représentées par des impulsions de mesure dont l'ordonnancement temporel est représentatif de ces valeurs, ce système comprenant une pluralité d'unités de traitement pour traiter lesdites impulsions de mesure, lesdites unités de traitement étant agencées selon au moins une rangée et comprenant chacune une sortie sur laquelle, au cours de cycles de traitement successifs, une impulsion de mesure qui y est traitée est susceptible d'être délivrée pour former le signal de sortie dudit système,
caractérisé en ce que chacune desdites unités de traitement comporte en outre des moyens d'inhibition pour, dans d'autres unités de ladite rangée et au cours d'un cycle de traitement considéré, inhiber le passage vers les sorties de ces autres unités des impulsions de mesure respectives qui y sont traitées et les empêcher ainsi de former ledit signal de sortie du système, si ces impulsions de mesure sont ordonnancées temporellement plus tardivement dans le cycle de traitement considéré que celle traitée dans l'unité considérée.

Grâce à ces caractéristiques, le système d'analyse ne fournit à sa sortie que l'information dont la pertinence est jugée la plus significative pour assurer une utilisation appropriée ultérieure de l'information.

Le système d'analyse selon l'invention peut également présenter les caractéristiques intéressantes suivantes:
- il comprend en outre des moyens pour, sur une pluralité de cycles de traitement successifs, comptabiliser les impulsions de mesure délivrées en sortie dudit système et pour interrompre le traitement desdites impulsions de mesure, lorsque le nombre d'impulsions ainsi délivrées atteint une valeur prédéterminée;
- lesdites valeurs spatiales représentant ladite grandeur physique sont formées par des amplitudes instantanées de celle-ci, mesurées respectivement localement pendant des cycles de traitement successifs, et chacune desdites unités comprend en outre des moyens de conversion pour convertir lesdites amplitudes en des impulsions de mesure ordonnées temporellement;
- lesdits moyens de conversion comportent des moyens de commande qui provoquent le passage vers la sortie de ladite impulsion de mesure dans l'unité de traitement de ladite rangée dans laquelle l'ordonnancement de cette impulsion de mesure est le plus précoce dans ledit cycle considéré et représente de ce fait la valeur maximale parmi les valeurs de la grandeur physique détectées par les unités de traitement respectives au cours d'un cycle de traitement considéré;
- lesdits moyens de conversion comportent des moyens de commande qui provoquent le passage vers la sortie de ladite impulsion de mesure dans l'unité de traitement dans ladite rangée dans laquelle l'ordonnancement de cette impulsion est le plus tardif dans ledit cycle considéré et représente de ce fait la valeur minimale parmi les valeurs de la grandeur physique détectées par les unités de traitement respectives au cours d'un cycle de traitement considéré;
- lesdits moyens de commande comportent un comparateur auquel est appliqué d'une part l'amplitude apparaissant dans l'unité de traitement considérée au cours d'un cycle de traitement considéré et d'autre part un générateur d'un signal de référence variable selon un profil répété au cours de chaque cycle de traitement, ledit comparateur étant agencé pour fournir un signal d'inhibition auxdites unités adjacentes, lorsque, pendant un cycle de traitement considéré, ledit signal de référence devient égal à ladite amplitude;
- ledit générateur d'un signal de référence est agencé pour engendrer un signal de référence à croissance monotone et ladite impulsion de mesure correspond à la valeur spatiale la plus faible de ladite grandeur physique au cours d'un cycle de traitement considéré;
- ledit générateur d'un signal de référence est agencé pour engendrer un signal de référence à décroissance monotone, et ladite impulsion de mesure correspond à la valeur spatiale la plus élevée de ladite grandeur physique au cours d'un cycle de traitement considéré;
- il comporte une pluralité de rangées d'unités de traitement formant une matrice, lesdites unités étant agencées en rangées et en colonnes, et chaque unité de traitement comprend en outre des moyens de sélection pour provoquer l'inhibition sélective du passage vers la sortie des impulsions de mesure respectives dans les unités adjacentes à l'unité de traitement considéré, orientées selon une colonne, une rangée ou une diagonale de ladite matrice;
- chacune desdites unités de traitement comprend un circuit à filtre tournant auquel est appliquée ladite amplitude pour former un signal vectoriel dont la norme est représentée par l'ordonnancement de ladite impulsion de mesure, et dont la phase représente l'orientation de la variation spatiale de ladite grandeur physique, lesdits moyens de sélection comprenant en outre des moyens pour comparer la phase dudit signal vectoriel à l'ordonnancement temporel de ladite impulsion et pour en fonction de la position de phase de ladite impulsion de mesure autoriser l'inhibition des unités de traitement situées sélectivement selon une colonne, une rangée ou une diagonale de ladite matrice;
- lesdits moyens de sélection comprennent en outre des moyens pour autoriser sélectivement le passage vers ladite sortie de l'unité de traitement considérée, de l'impulsion de mesure qui y est traitée ou de l'information de phase de cette impulsion;
- chaque unité de traitement est connectée à un élément sensible à ladite grandeur physique et fournissant un signal analogique représentatif de l'évolution locale de celle-ci et formant lesdites amplitudes au cours desdits cycles de traitement successifs;
- ladite grandeur physique est la luminance émanant d'une scène observée par ledit système et ledit élément sensible est un photocapteur formant partie de chacune desdites unités de traitement;

D'autres caractéristiques et avantages de la présente invention apparaîtront au cours de la description qui va suivre, donnée uniquement à titre d'exemple et faite en se référant aux dessins annexés sur lesquels:
la figure 1 est un schéma très simplifié d'un système d'analyse spatiale selon l'invention;
la figure 2 est un graphe montrant des valeurs d'une grandeur physique pouvant, au cours d'un cycle de mesure, être détectées par des unités de traitement du système d'analyse selon l'invention, ces unités étant dans ce cas agencées selon une rangée;
la figure 3 est un schéma simplifié d'une unité de traitement du système d'analyse selon l'invention, celui-ci constituant dans ce cas, à titre d'exemple, un capteur photosensible unidimensionnel dont les unités de traitement sont agencées selon une rangée, la grandeur physique étant la luminance émanant d'une scène observée par le capteur;
la figure 4 est un graphe montrant les valeurs de la grandeur physique pouvant, au cours d'un cycle de mesure, être détectées par les unités de traitement du système d'analyse selon l'invention, ces unités étant dans ce cas agencées selon une matrice bidimensionnelle;
les figures 5A et 5B montrent schématiquement deux possibilités de propagation de l'inhibition parmi les unités de traitement d'une matrice bidimensionnelle d'unités de traitement;
la figure 6 est un schéma simplifié d'une unité de traitement d'une matrice bidimensionnelle selon l'invention;
la figure 7 est un diagramme des temps illustrant la forme de deux signaux pouvant être utilisés dans l'unité de traitement représentée sur la figure 6; et
la figure 8 montre le schéma simplifié d'une unité de traitement pour une matrice bidimensionnelle, réalisée selon une variante de l'invention.

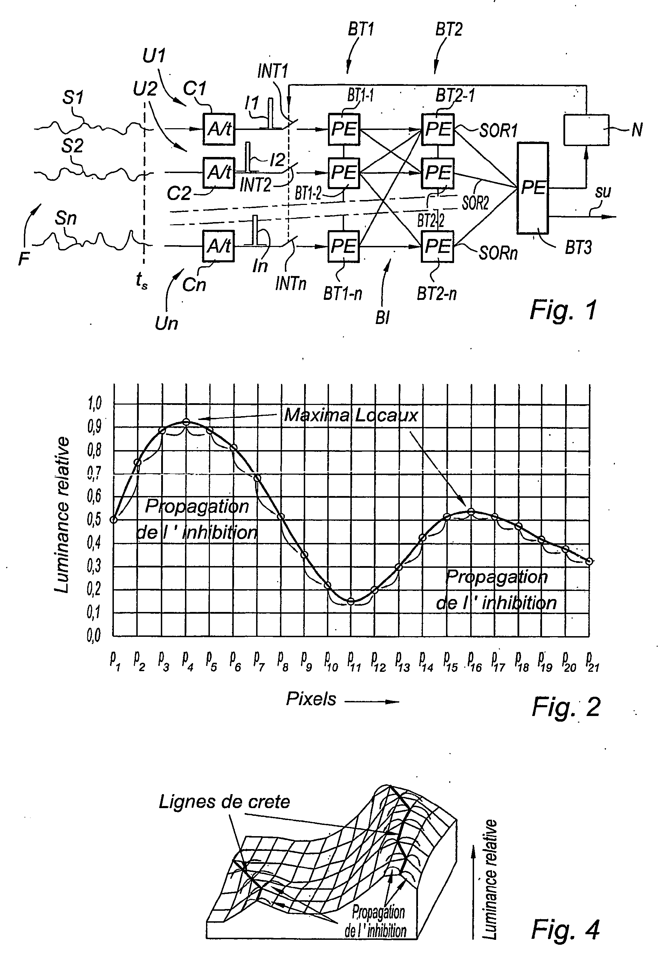

Sur la figure 1, on voit représenté à titre d'exemple un flot F de signaux S1, S2, ... ,Sn représentant collectivement un phénomène observé dont l'évolution spatiale d'une grandeur physique propre à ce phénomène peut rendre compte. Ces signaux sont appliqués à un système d'analyse selon l'invention dont la figure 1 représente un schéma symbolique. A titre non limitatif, il peut s'agir par exemple d'un groupe de signaux analogiques relevés par une matrice d'unités de traitement faisant partie d'un capteur photosensible (non représenté). Un tel capteur peut être utilisé, par exemple, dans un lecteur effectuant de la reconnaissance de caractères d'un message écrit. Il est à noter que dans un cadre plus général de l'invention, les signaux traduisant la grandeur physique spatiale peuvent être représentés par des impulsions dont la position temporelle les unes par rapport aux autres traduit la pertinence de l'information que représentent ces signaux.

Cependant, dans le cas de la figure 1, on suppose que les signaux S1 à Sn sont de nature analogique et respectivement appliqués à autant de convertisseurs amplitude-temps C1 à Cn qui délivrent une impulsion de mesure I1 à In, lorsque l'amplitude du signal analogique répond à un critère prédéterminé ; par exemple, lorsque le signal passe par une valeur de seuil donnée. De tels convertisseurs sont connus en soi et décrits par exemple dans EP 1 150 250 au nom du demandeur de la présente demande de brevet.

Dès lors, l'ordonnancement temporel se traduit par un étalement dans le temps des impulsions de mesure de telle sorte qu'elles apparaissent dans l'ordre temporel par lequel les signaux analogiques sont passés par ladite valeur de seuil donnée. Les convertisseurs amplitude-temps C1 à Cn font partie d'unités de traitement respectives U1 à Un. Ils délivrent respectivement des impulsions de mesure qui sont appliquées à des premiers blocs de traitement BT1-1 à BT1-n où elles peuvent subir un traitement approprié non décrit ici. Les premiers blocs de traitement transmettent ensuite les signaux traités à des seconds blocs de traitement BT2-1 à BT2-n qui effectuent un autre traitement approprié. Cependant, la transmission de ces signaux est subordonnée à une procédure d'inhibition symbolisée par les interconnexions croisées formant une barrière d'inhibition BI, de sorte que seulement l'information jugée pertinente passe dans les blocs de traitement BT2-1 à BT2-n. Par exemple, on peut envisager que la barrière d'inhibition ne laisse passer vers le deuxième jeu de blocs de traitement BT2-1 à BT2-n que l'impulsion représentant le passage par un maximum spatial du signal analogique dont elle est issue.

Il est à noter que les unités de traitement U1 à Un, qui peuvent comporter plus que deux niveaux (ou couches) de blocs de traitement, effectuent des cycles de travail consécutifs pendant chacun desquels elles analysent de façon synchrone avec les autres unités un échantillon du signal analogique qui leur est appliqué.

Les sorties SOR1 à SORn des seconds blocs de traitement BT2-1 à BT2-n, qui sont celles des unités de traitement correspondantes, sont collectivement appliquées à un unique troisième bloc de traitement BT3 qui effectue un traitement terminal sur les seules impulsions ayant passé la barrière d'inhibition Bl, matérialisée par les interconnexions entre les premiers et seconds blocs de traitement. La sortie de ce troisième bloc de traitement BT3 délivre le signal utile sur une borne SU du système à la fin de chaque cycle de travail des unités de traitement U1 à Un. Les apparitions successives de ces signaux utiles peuvent être comptabilisées dans un compteur N qui, lorsqu'il atteint une position prédéterminée, peut commander l'interruption de la transmission des impulsions à partir des convertisseurs C1 à Cn, le nombre comptabilisé dans le compteur étant alors représentatif du fait que les signaux utiles délivrés sont suffisamment nombreux pour que leur exploitation puisse être efficace. L'interruption peut être réalisée par un ensemble d'interrupteurs INT1 à INTn implémentés par tout moyen approprié.

Le système qui vient d'être décrit illustre le concept de base de l'invention consistant en ce qu'un signal (une impulsion parmi les impulsions I1 à In) précédant d'autres signaux (les autres impulsions) peut exercer sur ceux-ci une action alors même que ces autres signaux ne sont pas encore apparus, ceci par le biais d'une inhibition (la barrière d'inhibition BI). Ce principe de calcul basé sur l'absence des signaux moins pertinents conduit à une simplification notable. Par ailleurs, d'un point de vue énergétique, il est plus économique d'exercer une action sur un signal non encore apparu que sur un signal déjà présent et il peut même en résulter une convergence plus rapide des résultats.

Plus généralement, dans un système à plusieurs couches (ici BT1, BT2 et BT3) tel qu'il vient d'être décrit, l'ordonnancement temporel permet de commander le flux d'informations en fonction des résultats intermédiaires ou finaux.

Dans l'application à la reconnaissance de caractères déjà évoquée en préambule, il a été démontré que la reconnaissance pouvait être effectuée en utilisant seulement 5 à 10% de l'information contenue dans l'image prise par le système d'analyse. Grâce au concept de l'invention qui vient d'être illustré à propos de la figure 1, la couche finale peut inhiber la première couche du système (blocs de traitement BT1-1 à BT1-n) aussitôt qu'un caractère est reconnu, ce qui permet d'éviter le traitement de 90 à 95% des signaux. On peut ainsi réduire la consommation, voire même simplifier les circuits. Les spécialistes comprendront que ce concept peut être appliqué chaque fois qu'un phénomène observé se traduit par la génération d'un flot de signaux dont il faut exploiter le contenu d'informations.

On va maintenant décrire plus en détail une application du concept général qui vient d'être exposé à l'ordonnancement temporel d'un ensemble de valeurs d'une grandeur physique, ces valeurs étant détectées par un capteur comprenant une pluralité d'unités de traitement sensibles à cette grandeur physique. Pour plus de commodité, on appellera ces unités de traitement des "pixels" dans la suite de la description, bien qu'ils n'aient pas nécessairement une relation avec un phénomène optique appartenant à l'imagerie, domaine auquel généralement le terme "pixel" est réservé. On admettra en outre que ces "pixels" peuvent être agencés dans le capteur soit selon une disposition unidimensionnelle, auquel cas ils sont disposés sur une rangée, soit selon un agencement bidimensionnel formant une matrice plane.

Dans un cas pratique dans lequel l'invention est particulièrement utile, la grandeur physique à évolution spatiale est la luminance provenant d'une scène observée par le capteur qui, dans ce cas, prend des images de la scène au cours de cycles successifs de prise d'images. C'est ce cas qui sera décrit ci-après en tant qu'exemple non limitatif d'application de l'invention. Dans cet exemple spécifique, le capteur comportera donc des unités de traitement ou pixels photosensibles, repérés par la référence pₙ et agencés selon une rangée ou selon une matrice. Chaque pixel est capable de fournir une information locale de luminance de la scène observée par le capteur. L'information recueillie est traitée et ordonnée temporellement pour, ensuite, être exploitée d'une manière connue, qui ne fait pas partie de l'invention et ne sera donc pas décrite en détail.

La figure 2 est un graphe montrant les valeurs de luminance pouvant, au cours d'un cycle de prise d'image, être détectées par les pixels d'un capteur photosensible bidimensionnel comportant ici, à titre d'exemple, 21 pixels référencés p₁ à p₂₁ On voit que l'allure de l'ensemble des valeurs de luminance relevées, ou en d'autres termes le profil spatial de la grandeur physique constituée par la luminance, comporte deux maxima locaux captés par les pixels p₄ et p₁₆ respectivement, les valeurs de ces maxima étant d'ailleurs différentes. La figure indique également que, selon les concepts de l'invention, la détection des maxima sur les pixels p₄ et P₁₆ entraîne, au cours du cycle de prise d'image concerné, l'inhibition des autres pixels du capteur, l'ordre d'inhibition se propageant de proche en proche des pixels p₄ et p₁₆ vers leurs voisins dans les deux sens possibles. Il apparaîtra par la suite qu'il est également possible de détecter les minima de l'allure des valeurs de luminance.

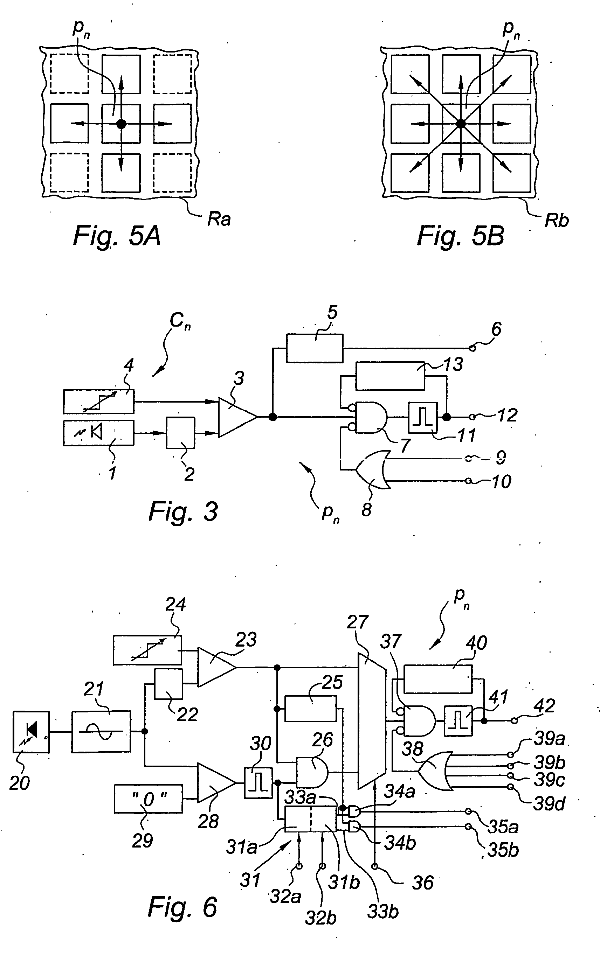

On va maintenant se référer à la figure 3 qui montre, sous forme de blocs fonctionnels, un mode de réalisation préféré d'un pixel quelconque pₙ d'un capteur unidimensionnel dont tous les pixels ont une structure identique et sont agencés selon une rangée.

La luminance locale émanant de la scène observée et captée' par le pixel pₙ est détectée par un composant photosensible 1, tel qu'une photodiode par exemple, et stockée dans l'élément de stockage ("sample and hold") 2. Le signal ainsi mis en forme est appliqué sur une première entrée d'un comparateur 3. L'autre entrée de ce dernier est connectée à la sortie d'un générateur de seuil 4 dont la sortie est formée par un signal variable de façon prédéterminée. Cette variation est la même pendant chaque cycle de prise d'image du capteur.

La sortie du comparateur 3 est connectée à un bloc 5 d'activation d'inhibition qui est destiné à envoyer, le cas échéant, un signal d'inhibition aux pixels pₙ₋₁ et pₙ₊₁ voisins du pixel pₙ dans la rangée de pixels du capteur. Ce signal d'inhibition apparaît sur une borne de sortie 6 du pixel.

La sortie du comparateur 3 est également connectée à une première entrée d'une porte ET 7. Celle-ci reçoit sur une deuxième entrée complémentée la sortie d'une porte OU 8 dont les deux entrées 9 et 10 sont connectées respectivement aux sorties 6 des deux pixels pₙ₋₁ et pₙ₊₁. La sortie de la porte ET 7 est reliée à un générateur d'impulsions 11 qui est déclenché lorsque la porte ET 7 est passante. Dans ce cas, il délivre une impulsion de sortie du pixel sur une sortie 12 de celui-ci. Cette sortie est également connectée à un bloc d'inhibition 13 destiné à délivrer à une troisième entrée complémentée de la porte ET 7 une impulsion de commande d'inhibition à partir du moment où, pendant un cycle de prise d'image, la porte ET 7 a délivré une impulsion de commande au générateur d'impulsions 11.

Pour décrire le fonctionnement de ce pixel, on suppose que l'information issue des pixels du capteur doive être ordonnée temporellement par amplitude décroissante.

Pour réinitialiser le capteur au début de chaque prise d'image, le générateur de seuil 4, qui peut être commun à tous les pixels, est réglé de manière qu'il délivre la valeur de seuil maximale. Le bloc d'inhibition 5 est initialisé à son état inactif par défaut.

Puis, la valeur de seuil délivrée par le générateur de seuil 4 est progressivement décrémentée. Si on suppose que pendant le cycle d'image considéré, le pixel pₙ reçoive la plus grande quantité de lumière par rapport à celles reçues par ses voisins, son comparateur 3 va basculer en premier dès que les valeurs des signaux qui y sont appliqués deviennent égales. La sortie du comparateur 3 change d'état et commande le bloc d'inhibition 5 de manière à bloquer la délivrance d'une impulsion de sortie par les pixels voisins pₙ₋₁ et pₙ₊₁. La porte ET 7 devient passante (aucun signal d'inhibition n'est encore reçu sur les entrées 9 ou 10 du pixel pₙ) et le générateur d'impulsions 12 délivre une impulsion de sortie sur la borne 12. L'instant, pendant le cycle de prise d'image, auquel apparaît cette impulsion sur la sortie 12 est fonction de la valeur de luminance captée par le pixel pₙ, en l'occurrence, la valeur maximale locale. Simultanément, par l'intermédiaire du bloc d'inhibition 13, le pixel pₙ est empêché désormais de délivrer, pendant le cycle d'image considéré, toute nouvelle impulsion de sortie.

Le générateur de seuil 4 réduisant davantage son signal de sortie, les comparateurs 3 des pixels voisins Pₙ₋₁ et Pₙ₊₁, qui ont reçu le signal d'inhibition du pixel pₙ, basculent à leur tour, mais dans ce cas ces pixels ne peuvent émettre une impulsion sur leur sortie 12, car leur porte ET 7 est bloquée. Cependant, les blocs d'inhibition 5 opèrent néanmoins l'inhibition des pixels suivants, respectivement pₙ₋₂ et pₙ₊₂. Ainsi, l'inhibition est propagée de pixel en pixel jusqu'à ce que soit atteinte, le cas échéant, une valeur minimale de luminance. Ceci est le cas par exemple du pixel p₁₁ représenté sur la figure 2.

Lorsque la valeur de seuil arrive à sa valeur minimale prévue, seuls les pixels auxquels correspondent des maxima locaux de luminance auront délivré une impulsion sur leur borne de sortie, chaque impulsion étant apparue en fonction de la valeur relative de ce maximum en codant donc temporellement cette valeur. Dans l'exemple de la figure 2, ces impulsions sont émises par les pixels p₄ et P₁₆.

Dans le fonctionnement qui vient d'être décrit, la valeur de seuil délivré par le bloc 4 est supposée décroître de façon monotone durant le cycle de prise d'image, l'information la plus pertinente étant dans ce cas supposée être portée par les amplitudes maximales locales de la grandeur qui représente cette information (la luminance dans l'exemple).

Cependant, selon une variante de l'invention, il est possible d'ordonner l'information par amplitude croissante. Dans ce cas, il est fait en sorte que la valeur de seuil délivrée par le bloc 4 soit croissante de façon monotone pendant chaque cycle de prise d'image de sorte que seules les impulsions correspondant à des minima locaux soient délivrées par les pixels concernés. L'inhibition se propage alors en sens inverse. Par ailleurs, contrairement à l'exemple décrit ci-dessus, l'information correspondant au maximum local le plus faible précède alors chaque fois celle ou celles correspondant au(x) maximum(s) local(aux) plus fort(s).

Selon une autre variante, il est possible d'affecter à la valeur du signal délivré par le générateur 4, une variation différente d'une courbe monotone moyennant quoi, l'information la plus pertinente pourra être déterminée selon un autre critère que celui d'être un maximum ou un minimum. Par conséquent, l'invention permet d'établir ce critère d'une façon très simple.

On notera également qu'à la différence du concept décrit à propos de la figure 1 où la barrière d'inhibition BI inhibe simultanément toutes les unités de traitement U1 à Un, dans le cas de la figure 3 (voir la figure 2), l'inhibition se propage de pixel en pixel au cours du cycle de mesure considéré.

L'exemple décrit ci-dessus se rapporte à un réseau unidimensionnel de pixels. Cependant, selon un autre mode de réalisation de l'invention, il est également possible d'ordonner temporellement de l'information dans le cas d'un réseau bidimensionnel de pixels, étant entendu que, dans ce cas également, le terme pixel recouvre de façon générale, un ensemble comprenant un capteur d'une grandeur mesurée ainsi que les circuits associés pour le traitement de la valeur mesurée, un cas particulier étant ici également celui dans lequel le pixel détecte la luminance locale d'une scène observée par le réseau bidimensionnel de pixels.

Dans le cas d'un tel réseau bidimensionnel, l'information (telle le gradient, ou dérivée spatiale, de la luminance dont les composantes sont l'amplitude et la phase) est vectorielle de sorte qu'il est nécessaire de déterminer un autre critère d'ordonnancement des informations. Plus précisément, ce critère doit définir dans quelles directions il convient de faire se propager l'inhibition des pixels voisins d'un pixel pₙ quelconque considéré dans le réseau.

La figure 4 est un diagramme analogue à celui de la figure 2, mais étendu à deux dimensions, la grandeur physique mesurée étant relevée par une matrice de pixels bidimensionnelle. On voit que, dans l'exemple représenté, le diagramme relevé présente deux "lignes de crête" tracées sur des maxima locaux relevés par les pixels. Le diagramme indique aussi, de façon approximative, comment l'inhibition peut être propagée de pixel en pixel dans la matrice. Les figures 5A et 5B présentent deux cas typiques de critères envisageables. Sur la figure 5A, l'inhibition est propagée d'un pixel pₙ d'une matrice Ra seulement aux pixels voisins situés sur les axes horizontaux et verticaux définis dans cette matrice, tandis que sur la figure 5B on ajoute à cette propagation également celles correspondant aux diagonales de la matrice indiquée ici par Rb.

Par ailleurs, l'information pertinente étant en général portée par la norme du vecteur, c'est celle-ci qui est exploitée pour l'ordonnancement temporel des maxima. Dans ce cas également, on peut effectuer cet ordonnancement par amplitude croissante ou décroissante, par analogie avec ce qui a été décrit ci-dessus à propos des réseaux unidimensionnels.

En se référant à la figure 6, on va maintenant décrire un exemple de réalisation d'un pixel d'une matrice fonctionnant selon le principe illustré à la figure 5A et appliqué au cas où la grandeur physique est la luminance mesurée à partir d'une scène observée par le réseau, les pixels comportant donc, ici également, des photocapteurs pour détecter la lumière qui en provient. Comme dans le cas de la figure 3, tous les pixels de la matrice ont la même configuration de circuit.

L'information locale de luminance est détectée par un composant photosensible 20 tel qu'une diode, dont le signal de sortie est traité dans un circuit de conversion 21 dit "à filtres tournants" dans lequel l'information vectorielle est modulée temporellement à l'aide d'une fonction sinusoïdale. La réalisation d'un tel circuit est décrite en détail dans la demande de brevet européen précitée.

Le signal sinusoïdal issu du circuit de conversion 21 est appliqué par l'intermédiaire d'un circuit 22 de détection du maximum et de stockage de cette valeur ("sample and hold") à une première entrée d'un comparateur 23 dont l'autre entrée est connectée à un circuit 24 à seuil variable qui peut être commun à tous les pixels. La sortie de ce comparateur 23 est connectée à un bloc d'activation d'inhibition 25, à la première entrée d'une porte ET 26 et à une première entrée d'un multiplexeur 27.

La sortie du circuit de conversion 21 est également reliée à une première entrée d'un comparateur 28 dont l'autre entrée est reliée à un générateur 29 d'une tension de référence de valeur nulle. La sortie de ce comparateur 28 est reliée à un formateur d'impulsions 30 dont la sortie est raccordée d'une part, à la seconde sortie de la porte ET 26 et d'autre part, à la borne de commande de mise en mémoire d'une mémoire 31 à deux cellules 31 a et 31b. Ces cellules sont destinées à stocker temporairement des commandes de présélection respectivement horizontale et verticale par l'intermédiaire d'entrées 32a et 32b. Les contenus de ces cellules de mémoire apparaissent respectivement sur deux sorties 33a et 33b qui sont les premières entrées de portes ET respectives 34a et 34b. Les deux autres entrées de ces dernières sont connectées ensemble à la sortie du bloc d'activation d'inhibition 25. Les sorties 35a et 35b des portes ET 34a et 34b constituent les commandes respectives d'inhibition des pixels horizontaux, respectivement verticaux voisins du pixel pₙ considéré.

La sortie de la porte ET 26 est connectée à l'autre entrée du multiplexeur 27. Celui-ci peut être commandé par l'intermédiaire d'une entrée de commande 36 afin de permettre une sélection de l'information d'ordonnancement portant, soit sur la norme, soit sur l'orientation du vecteur d'entrée du pixel pₙ.

La sortie du multiplexeur 27 est reliée à l'une des entrées d'une porte ET 37 dont l'une des autres entrées complémentées, reçoit la sortie d'une porte OU 38. Les entrées 39a à 39d sont respectivement reliées aux pixels voisins horizontaux ou verticaux, pour en recevoir, le cas échéant, les signaux d'inhibition 35a et 35b. La dernière entrée de la porte ET 37 est reliée à un bloc d'inhibition 40 dont l'entrée est connectée à un générateur d'impulsion 41 commandé par la sortie de la porte ET 37. Le noeud, correspondant à la sortie du générateur 41 et à l'entrée du bloc 40, constitue la sortie 42 du pixel.

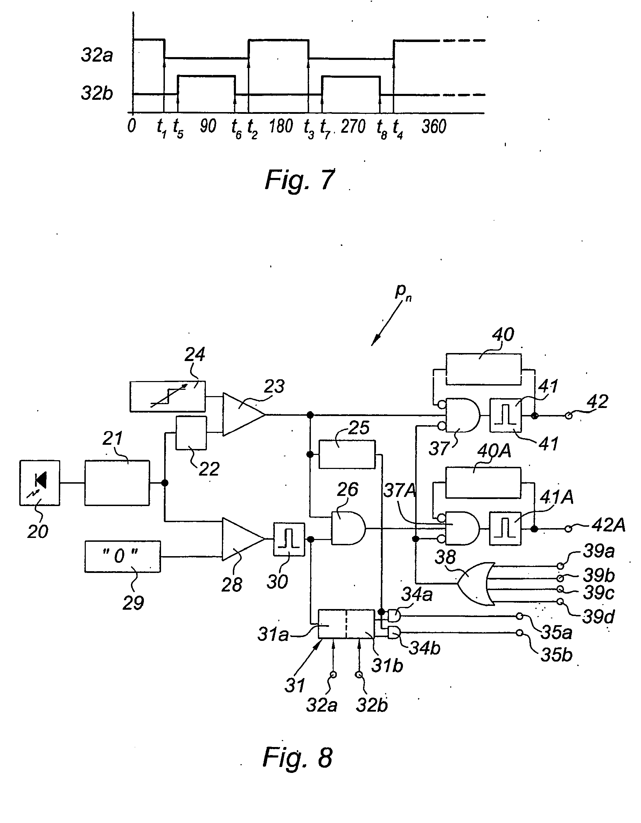

La figure 7 est un diagramme représentant la forme des signaux appliqués respectivement sur les entrées 32a et 32b des cellules de mémoire 31a et 31b. Ces signaux sont préparés dans un bloc de commande du pixel (non représenté aux dessins). Les instants, où surviennent les fronts montants et descendants de ces signaux, sont de préférence réglables.

Le fonctionnement du pixel représenté sur la figure 6 sera maintenant décrit à la lumière des formes des signaux représentés sur la figure 7.

Au début de chaque cycle d'acquisition de signaux, les cellules de mémoire 31 a et 31 b sont initialisées avec des signaux de niveau bas.

Pendant que se déroule la première période de la sinusoïde représentant le signal utile et engendré grâce au principe des filtres tournants, le seuil établi par le bloc 24 est maintenu à son niveau maximal de sorte que le comparateur 23 ne peut basculer, l'amplitude maximale du signal utile étant inférieure à ce seuil. Cependant, le comparateur 28 compare l'évolution du signal utile à un niveau nul de sorte qu'au premier passage par zéro de ce signal utile, le comparateur 28 bascule, ce qui est représentatif d'un angle de phase prédéterminé. S'il s'agit d'une application de prise d'image par un réseau photosensible, cet angle correspond à une direction orthogonale à l'orientation d'un contour lumineux observé par le pixel dans l'image prise par le photocapteur (par exemple pour la reconnaissance de caractères).

Au moment où le comparateur 28 bascule, un signal de commande de mise en mémoire est appliqué aux cellules de mémoire 31 a et 32b de sorte que les états actuels des signaux de la figure 7 y sont enregistrés. Si, à cet instant, le signal de présélection d'inhibition horizontale de la borne 32a est au niveau haut, la valeur correspondante est stockée dans la cellule 31a; ce qui signifie, dans l'exemple considéré, que le contour observé par le pixel considéré est situé dans un secteur angulaire vertical et que l'inhibition doit être propagée suivant une direction horizontale vers les pixels voisins. Si, au contraire, à cet instant, le signal de présélection d'inhibition verticale de la borne 32b est au niveau haut, la valeur correspondante est stockée dans la cellule de mémoire 31b; ce qui signifie que le contour observé par le pixel considéré est situé dans un secteur angulaire horizontal et que l'inhibition doit être propagée suivant une direction verticale vers les pixels voisins.

On peut envisager d'impliquer dans le mécanisme d'inhibition les huit voisins du pixel considéré, conformément au schéma de la figure 5B. Dans ce cas, il conviendrait de prévoir quatre signaux de présélection d'inhibition correspondant respectivement aux présélections d'inhibition horizontale, verticale, diagonale 135°-315° et diagonale 45°-225°. Il faudrait également quatre cellules de mémoire et une complication correspondante du reste du circuit du pixel.

Dès que la présélection d'inhibition est déterminée comme il vient d'être décrit, le générateur de seuil 24 délivre une valeur de seuil décroissante à partir de sa valeur maximale. Le premier pixel du réseau, dont la norme du signal utile devient égale au seuil, représente un maximum local. En fonction de l'état sélectionné pour le multiplexeur 27 par la commande sur la borne 36 est émise, soit une impulsion correspondant à la norme du vecteur du signal utile, soit une impulsion correspondant à l'orientation au cours du cycle suivant de "rotation" du vecteur. Dès que cette impulsion est émise, une émission ultérieure d'impulsions est empêchée par le bloc 40.

Suite au basculement du comparateur 23, le pixel considéré active le mécanisme d'inhibition des pixels voisins par l'intermédiaire de l'une des portes ET 34a ou 34b, la propagation de l'inhibition se fait dans la direction présélectionnée dans la cellule de mémoire concernée 31 a ou 31b.

Pendant que ces opérations se déroulent, le circuit à seuil 24 décrémente la valeur du seuil. Dès que cette valeur atteint la valeur de la norme du vecteur d'un pixel concerné par l'inhibition, ce dernier cherche à émettre sur sa borne de sortie 42 une impulsion représentative de l'instant où il y a égalité avec le seuil, mais la présence de l'information d'inhibition en provenance d'un pixel voisin sur l'une des entrées 39a à 39d de sa porte OU 38 empêche cette émission.

Cependant, l'information d'inhibition continue à être propagée d'un pixel voisin à l'autre jusqu'à ce qu'un pixel soit atteint qui a également inhibé par un autre pixel, à l'instar de ce qui se passe dans le cas de la figure 2 pour le pixel p₁₁. On notera qu'en pratique, l'inhibition est toujours propagée dans les deux sens d'une direction, quel que soit le pixel considéré, c'est à dire qu'elle est aussi propagée vers le pixel précédent. Mais comme ce dernier a déjà émis une impulsion, son circuit d'inhibition est déjà activé et il ne peut donc plus émettre. L'information d'inhibition qui lui est envoyée n'a donc pas d'effet.

La figure 8 représente une variante du schéma du pixel représenté sur la figure 6.Dans ce cas, les fonctionnalités des blocs 37, 40 et 42 sont doublées par des blocs 37A, 40A et 41A de sorte qu'au lieu d'une seule information par cycle de prise d'image on peut en sortir deux, à savoir à la fois une impulsion représentant la norme et une impulsion représentant la phase du vecteur. Selon une variante non représentée sur la figure 8, il est possible, moyennant quelques blocs logiques dont la réalisation est à la portée des spécialistes, de déterminer à quelle information (norme ou angle du vecteur) s'applique l'inhibition.

## Revendications

1. Système d'analyse spatiale d'une grandeur physique dont les valeurs spatiales (S1 à Sn) sont respectivement représentées par des impulsions de mesure (I1 à In) dont l'ordonnancement temporel est représentatif de ces valeurs, ce système comprenant une pluralité d'unités de traitement (U1 à Un; pₙ) pour traiter lesdites impulsions de mesure, lesdites unités de traitement étant agencées selon au moins une rangée et comprenant chacune une sortie (SOR1 à SORn) sur laquelle, au cours de cycles de traitement successifs, une impulsion de mesure qui y est traitée est susceptible d'être délivrée pour former le signal de sortie dudit système (SU),
**caractérisé en ce que** chacune desdites unités de traitement (U1 à Un; Pₙ) comporte en outre des moyens d'inhibition (BI; 5; 25) pour, dans d'autres unités de ladite rangée et au cours d'un cycle de traitement considéré, inhiber le passage vers les sorties (SOR1 à SORn; 6; 42) de ces autres unités des impulsions de mesure respectives qui y sont traitées et les empêcher ainsi de former ledit signal de sortie (SU) du système, si ces impulsions de mesure sont ordonnancées temporellement plus tardivement dans le cycle de traitement considéré que celle traitée dans l'unité considérée.

2. Système suivant la revendication 1, **caractérisé en ce qu'**il comprend en outre des moyens (N) pour, sur une pluralité de cycles de traitement successifs, comptabiliser les impulsions de mesure délivrées en sortie (SU) dudit système et pour interrompre (INT1 à INTn) le traitement desdites impulsions de mesure, lorsque le nombre d'impulsions ainsi délivrées atteint une valeur prédéterminée.

3. Système suivant l'une quelconque des revendications 1 et 2, **caractérisé en ce que** lesdites valeurs spatiales (S1 à Sn) représentant ladite grandeur physique sont formées par des amplitudes instantanées de celle-ci, mesurées respectivement localement pendant des cycles de traitement successifs, et **en ce que** chacune desdites unités (U1 à Un; pₙ) comprend en outre des moyens de conversion (C1 à Cn; 3, 4; 21, 23, 24) pour convertir lesdites amplitudes en des impulsions de mesure ordonnées temporellement (I1 à In).

4. Système suivant la revendication 3, **caractérisé en ce que** lesdits moyens de conversion comportent des moyens de commande (4) qui provoquent le passage vers la sortie (6) de ladite impulsion de mesure dans l'unité de traitement de ladite rangée dans laquelle l'ordonnancement de cette impulsion de mesure est le plus précoce dans ledit cycle considéré et représente de ce fait la valeur maximale parmi les valeurs de la grandeur physique détectées par les unités de traitement respectives (pₙ) au cours d'un cycle de traitement considéré.

5. Système suivant la revendication 3, **caractérisé en ce que** lesdits moyens de conversion comportent des moyens de commande (3 4; 23, 24) qui provoquent le passage vers la sortie de ladite impulsion de mesure dans l'unité de traitement dans ladite rangée dans laquelle l'ordonnancement de cette impulsion est le plus tardif dans ledit cycle considéré et représente de ce fait la valeur minimale parmi les valeurs de la grandeur physique détectées par les unités de traitement respectives (pₙ) au cours d'un cycle de traitement considéré.

6. Système suivant l'une quelconque des revendications 4 et 5, **caractérisé en ce que** lesdits moyens de commande comportent un comparateur (3; 23) auquel est appliqué d'une part l'amplitude apparaissant dans l'unité de traitement considérée (U1 à Un; pₙ) au cours d'un cycle de traitement considéré et d'autre part un générateur d'un signal de référence variable (4; 24) selon un profil répété au cours de chaque cycle de traitement, ledit comparateur étant agencé pour fournir un signal d'inhibition auxdites unités adjacentes, lorsque, pendant un cycle de traitement considéré, ledit signal de référence devient égal à ladite amplitude.

7. Système suivant les revendications 4 et 6 prises ensemble, **caractérisé en ce que** ledit générateur d'un signal de référence (4; 24) est agencé pour engendrer un signal de référence à croissance monotone et ladite impulsion de mesure correspond à la valeur spatiale la plus faible de ladite grandeur physique au cours d'un cycle de traitement considéré.

8. Système suivant les revendications 5 et 6 prises ensemble, **caractérisé en ce que** ledit générateur d'un signal de référence (4; 24) est agencé pour engendrer un signal de référence à décroissance monotone, et ladite impulsion de mesure correspond à la valeur spatiale la plus élevée de ladite grandeur physique au cours d'un cycle de traitement considéré.

9. Système suivant l'une quelconque des revendications précédentes, **caractérisé en ce qu'**il comporte une pluralité de rangées d'unités de traitement (pₙ) formant une matrice, lesdites unités étant agencées en rangées et en colonnes, **en ce que** chaque unité de traitement comprend en outre des moyens de sélection (31 à 34b) pour provoquer l'inhibition sélective du passage vers la sortie des impulsions de mesure respectives dans les unités adjacentes à l'unité de traitement considéré, orientées selon une colonne, une rangée ou une diagonale de ladite matrice.

10. Système suivant la revendication 9, **caractérisé en ce que** chacune desdites unités de traitement (pₙ) comprend un circuit à filtre tournant (21) auquel est appliquée ladite amplitude pour former un signal vectoriel dont la norme est représentée par l'ordonnancement de ladite impulsion de mesure, et dont la phase représente l'orientation de la variation spatiale de ladite grandeur physique, lesdits moyens de sélection comprenant en outre des moyens pour comparer la phase dudit signal vectoriel à l'ordonnancement temporel de ladite impulsion et pour en fonction de la position de phase de ladite impulsion de mesure autoriser l'inhibition des unités de traitement situées sélectivement selon une colonne, une rangée ou une diagonale de ladite matrice.

11. Système suivant la revendication 10, **caractérisé en ce que** lesdits moyens de sélection comprennent en outre des moyens (27) pour autoriser sélectivement le passage vers ladite sortie de l'unité de traitement considérée, de l'impulsion de mesure qui y est traitée ou de l'information de phase de cette impulsion.

12. Système suivant l'une quelconque des revendications 1 à 11, **caractérisé en ce que** chaque unité de traitement est connectée à un élément (1; 20) sensible à ladite grandeur physique et fournissant un signal analogique représentatif de l'évolution locale de celle-ci et formant lesdites amplitudes au cours desdits cycles de traitement successifs.

13. Système suivant la revendication 12, **caractérisé en ce que** ladite grandeur physique est la luminance émanant d'une scène observée par ledit système et **en ce que** ledit élément sensible est un photocapteur (1; 20) formant partie de chacune desdites unités de traitement (pₙ).

## Claims

1. System for spatial analysis of a physical quantity whose spatial values (S1 to Sn) are respectively represented by measurement pulses (11 to In) whose order in time is representative of those values, this system comprising a plurality of processing units (U1 to Un; pₙ) for processing said measurement pulses, said processing units being arranged in one or more rows and each having an output (SOR1 to SORn) at which, during successive processing cycles, a measurement pulse that is processed therein may be delivered to form the output signal (SU) of said system,
**characterized in that** each of said processing units (U1 to Un; pₙ) further includes inhibition means (BI; 5; 25) for inhibiting, in other units of said row and during a processing cycle, the passage toward the outputs (SOR1 to SORn; 6; 42) of those other units of respective measurement pulses that are processed therein, and thereby preventing them from forming said output signal (SU) of the system, if those measurement pulses are ordered later in the processing cycle concerned than the pulse processed in the unit concerned.

2. System according to claim 1, **characterized in that** it further comprises means (N) for counting the measurement pulses delivered at the output (SU) of said system over a plurality of successive processing cycles and for interrupting (INT1 to INTn) the processing of said measurement pulses if the number of pulses delivered in this way reaches a predetermined value.

3. System according to either claim 1 or claim 2, **characterized in that** said spatial values (S1 to Sn) representing said physical quantity are instantaneous amplitudes thereof measured locally during respective successive processing cycles, and **in that** each of said units (U1 to Un; pₙ) further comprises conversion means (C1 to Cn; 3, 4; 21, 23, 24) for converting said amplitudes into measurement pulses (11 to In) ordered in time.

4. System according to claim 3, **characterized in that** said conversion means include control means (4) that bring about the passage to the output (6) of said measurement pulse in the processing unit of said row in which the order in time of that measurement pulse is the earliest in said cycle concerned and therefore represents the maximum value of the values of the physical quantity detected by the respective processing units (pₙ) during a processing cycle.

5. System according to claim 3, **characterized in that** said conversion means include control means (3, 4; 23, 24) that bring about the passage to the output of said measurement pulse in the processing unit in said row in which that pulse is the latest in said cycle concerned and therefore represents the minimum value of all the values of the physical quantity detected by the respective processing units (pₙ) during a processing cycle.

6. System according to either claim 4 or claim 5, **characterized in that** said control means include a comparator (3; 23) to which is applied, on the one hand, the amplitude appearing in the processing unit (U1 to Un; pₙ) concerned during a processing cycle and, on the other hand, a generator of a reference signal (4; 24) variable in accordance with a profile repeated during each processing cycle; said comparator being adapted to supply an inhibition signal to said adjacent units if said reference signal becomes equal to said amplitude during a processing cycle.

7. System according to claim 4 in conjunction with claim 6, **characterized in that** said reference signal generator (4; 24) is adapted to generate a monotonously increasing reference signal and said measurement pulse corresponds to the lowest spatial value of said physical quantity during a processing cycle.

8. System according to claim 5 in conjunction with claim 6, **characterized in that** said reference signal generator (4; 24) reference signal is adapted to generate a monotonously decreasing reference signal and said measurement pulse corresponds to the highest spatial value of said physical quantity during a processing cycle.

9. System according to any one of the preceding claims, **characterized in that** it includes a plurality of rows of processing units (pₙ) forming a matrix, said units being arranged in rows and in columns, and **in that** each processing unit further comprises selection means (31 to 34b) for bringing about the selective inhibition of the passage toward the output of respective measurement pulses in the units adjacent the processing unit concerned, oriented in the direction of a column, a row or a diagonal of said matrix.

10. System according to claim 9, **characterized in that** each of said processing units (Pₙ) comprises a turning filter circuit (21) to which said amplitude is applied to form a vectorial signal whose norm is represented by the order of said measurement pulse and whose phase represents the orientation of the spatial variation of said physical quantity, said selection means further comprising means for comparing the phase of said vectorial signal to the order in time of said pulse and for authorizing, as a function of the phase position of said measurement pulse, the inhibition of the processing units selectively situated in a column, a row or a diagonal of said matrix.

11. System according to claim 10, **characterized in that** said selection means further comprise means (27) for selectively authorizing the passage to said output of the processing unit concerned of the measurement pulse that is processed therein or of the phase information of that pulse.

12. System according to any one of claims 1 to 11, **characterized in that** each processing unit is connected to an element (1; 20) responsive to said physical quantity and supplying an analog signal representative of the local evolution thereof and forming said amplitudes during said successive processing cycles.

13. System according to claim 12, **characterized in that** said physical quantity is the luminance emanating from a scene observed by said system and **in that** said sensitive element is a photosensor (1; 20) forming part of each of said processing units (pₙ).

## Patentansprüche

1. Räumliches Analysesystem für eine physische Größe, deren räumliche Werte (S bis Sn) jeweils durch Messimpulse (I1 bis In) dargestellt werden, deren zeitliche Ordnung für diese Werte repräsentativ ist, wobei dieses System eine Mehrzahl von Verarbeitungseinheiten (U bis Un; p*ₙ*) zum Verarbeiten der Messimpulse umfasst, wobei die Verarbeitungseinheiten gemäß mindestens einer Reihe angeordnet sind und jeweils einen Ausgang (SOR1 bis SORn) umfassen, auf dem im Verlauf aufeinander folgender Verarbeitungszyklen ein Messimpuls, der darin verarbeitet wird, geliefert werden kann, um das Ausgangssignal des Systems (SU) zu bilden,
**dadurch gekennzeichnet, dass** jede der Verarbeitungseinheiten (U1 bis Un; p*ₙ*) überdies Hemmungsmittel (BI; 5; 25) umfasst, um in anderen Einheiten der Reihe und im Verlauf eines betrachteten Verarbeitungszyklus' das Wandern der entsprechenden Messimpulse dieser anderen Einheiten, die darin verarbeitet werden, zu den Ausgängen (SOR1 bis SORn; 6; 42) zu hemmen und so zu verhindern, dass sie das Ausgangssignal (SU) des Systems bilden, wenn die Messimpulse im betrachteten Verarbeitungszyklus zeitlich später geordnet sind als derjenige, der in der betrachteten Einheit verarbeitet wird.

2. System nach Anspruch 1, **dadurch gekennzeichnet, dass** es überdies Mittel (N) zum Erfassen der Messimpulse, die am Ausgang (SU) des Systems geliefert werden, über eine Mehrzahl von aufeinander folgenden Verarbeitungszyklen, und zum Unterbrechen (INT1 bis INTn) der Verarbeitung der Messimpulse umfasst, wenn die Anzahl der so gelieferten Impulse einen vorbestimmten Wert erreicht.

3. System nach einem der Ansprüche 1 und 2, **dadurch gekennzeichnet, dass** die räumlichen Werte (S 1 bis Sn), die die physische Größe darstellen, durch momentane Amplituden davon gebildet werden, die jeweils lokal während aufeinander folgender Verarbeitungszyklen gemessen werden, und **dadurch**, dass jede der Einheiten (U1 bis Un; p*ₙ*) überdies Umwandlungsmittel (C1 bis Cn; 3, 4; 21, 23, 24) zum Umwandeln der Amplituden in zeitlich geordnete Messimpulse (I1 bis In) umfasst.

4. System nach Anspruch 3, **dadurch gekennzeichnet, dass** die Umwandlungsmittel Steuerungsmittel (4) umfassen, die das Wandern des Messimpulses in der Verarbeitungseinheit der Reihe, in der die Ordnung dieses Messimpulses in dem betrachteten Zyklus am frühesten ist und aus diesem Grund den höchsten Wert unter den Werten der physischen Größe darstellt, die durch die entsprechenden Verarbeitungseinheiten (p*ₙ*) im Verlauf eines betrachteten Verarbeitungszyklus' ermittelt wurden, zum Ausgang (6) verursachen.

5. System nach Anspruch 3, **dadurch gekennzeichnet, dass** die Umwandlungsmittel Steuerungsmittel (2, 4; 23, 24) umfassen, die das Wandern des Messimpulses in der Verarbeitungseinheit in der Reihe, in der die Ordnung dieses Messimpulses in dem betrachteten Zyklus am spätesten ist und aus diesem Grund den niedrigsten Wert unter den Werten der physischen Größe darstellt, die durch die entsprechenden Verarbeitungseinheiten (p*ₙ*) im Verlauf eines betrachteten Verarbeitungszyklus' ermittelt wurden, zum Ausgang verursachen.

6. System nach einem der Ansprüche 4 und 5, **dadurch gekennzeichnet, dass** die Steuerungsmittel einen Komparator (3; 23) umfassen, auf den einerseits die Amplitude, die in der betrachteten Verarbeitungseinheit (U1 bis Un; p*ₙ*) im Verlauf eines betrachteten Verarbeitungszyklus' auftritt, und andererseits ein Generator eines variablen Referenzsignals (4; 24) gemäß einem Profil, das im Verlauf von jedem Verarbeitungszyklus wiederholt wird, angewandt werden, wobei der Komparator eingerichtet ist, um ein Hemmungssignal für die benachbarten Einheiten bereitzustellen, wenn das Referenzsignal während eines betrachteten Verarbeitungszyklus' gleich der Amplitude wird.

7. System nach Anspruch 4 und 6 zusammen genommen, **dadurch gekennzeichnet, dass** der Generator eines Referenzsignals (4; 24) eingerichtet ist, um ein Referenzsignal mit gleichförmiger Zunahme zu erzeugen, und der Messimpuls dem niedrigsten räumlichen Wert der physischen Größe im Verlauf eines betrachteten Verarbeitungszyklus' entspricht.

8. System nach Anspruch 5 und 6 zusammen genommen, **dadurch gekennzeichnet, dass** der Generator eines Referenzsignals (4; 24) eingerichtet ist, um ein Referenzsignal mit gleichförmiger Abnahme zu erzeugen, und der Messimpuls dem höchsten räumlichen Wert der physischen Größe im Verlauf eines betrachteten Verarbeitungszyklus' entspricht.

9. System nach einem der vorhergehenden Ansprüche, **dadurch gekennzeichnet, dass** es eine Mehrzahl von Reihen von Verarbeitungseinheiten (p*ₙ*) umfasst, die eine Matrix bilden, wobei die Einheiten in Reihen und in Spalten eingerichtet sind, und **dadurch**, dass jede Verarbeitungseinheit überdies Auswahlmittel (31 bis 34b) umfasst, um die selektive Hemmung des Wanderns der jeweiligen Messimpulse in den Einheiten, die der betrachteten Verarbeitungseinheit benachbart sind, die gemäß einer Spalte, einer Reihe oder einer Diagonale der Matrix ausgerichtet sind, zum Ausgang auszulösen.

10. System nach Anspruch 9, **dadurch gekennzeichnet, dass** jede der Verarbeitungseinheiten (p*ₙ*) eine Rotationsfilterschaltung (21) umfasst, auf die die Amplitude angewandt wird, um ein Vektorsignal zu bilden, dessen Norm durch die Ordnung des Messimpulses dargestellt wird und dessen Phase die Ausrichtung der räumlichen Schwankung der physischen Größe darstellt, wobei die Auswahlmittel überdies Mittel zum Vergleichen der Phase des Vektorsignals mit der zeitlichen Ordnung des Impulses und zum selektiven Erlauben der Hemmung der Verarbeitungseinheiten, die gemäß einer Spalte, einer Reihe oder einer Diagonale der Matrix angeordnet sind, in Abhängigkeit von der Position der Phase des Messimpulses umfasst.

11. System nach Anspruch 10, **dadurch gekennzeichnet, dass** die Auswahlmittel überdies Mittel (27) zum selektiven Erlauben des Wanderns des Messimpulses, der in der betrachteten Verarbeitungseinheit verarbeitet wird, oder der Phaseninformationen dieses Impulses zu deren Ausgang umfassen.

12. System nach einem der Ansprüche 1 bis 11, **dadurch gekennzeichnet, dass** jede Verarbeitungseinheit an ein Element (1; 20) angeschlossen ist, das in Bezug auf die physische Größe empfindlich ist und das ein analoges Signal bereitstellt, das ihre lokale Entwicklung darstellt und im Verlauf der aufeinander folgenden Verarbeitungszyklen die Amplituden bildet.

13. System nach Anspruch 12, **dadurch gekennzeichnet, dass** die physische Größe die Luminanz ist, die von einer Szene herrührt, die durch das System beobachtet wird, und dass das empfindliche Element ein Fotosensor (1; 20) ist, der einen Teil von jeder der Verarbeitungseinheiten (p*ₙ)* bildet.
